# EUROPEAN PATENT SPECIFICATION

(11) **EP 3 022 503 B1**
(45) Date of publication and mention of the grant of the patent: **27.03.2024**
(21) Application number: 14825834.6
(22) Date of filing: 10.07.2014
(51) Int. Cl.: F01D 5/08, F04B 1/20, F04B 1/32, F04D 19/02, F04D 27/00, F02C 7/18, F04D 29/58, F04D 29/32

(54) **SPACER FOR A COMPRESSOR OF A GAS TURBINE.**
ABSTANDSHALTER FÜR EINEN VERDICHTER EINER GASTURBINE.
ENTRETOISE POUR COMPRESSEUR DE TURBINE À GAZ.

(30) Priority: 15.07.2013 US 201361846361 P
(43) Date of publication of application: 25.05.2016
(73) Proprietor: RTX Corporation, Farmington, CT 06032 (US)
(72) Inventor: POWELL, Brad, Guilford, Connecticut 06437 (US); BIFULCO, Anthony R., Ellington, Connecticut 06029 (US); CODERRE, Paul E., East Hampton, Connecticut 06424-7818 (US)
(74) Representative: Dehns
(86) International application number: PCT/US2014/046136
(87) International publication number: WO 2015/009537

(56) References cited:
- EP-A2- 2 586 968
- JP-A- H11 125 199
- JP-A- H11 125 199
- JP-B2- 3 758 835
- US-A- 5 232 339
- US-A- 5 340 274
- US-A1- 2009 226 327
- US-A1- 2010 326 088
- US-A1- 2012 027 606
- US-A1- 2012 027 606

## Description

### BACKGROUND

This disclosure generally relates to a cooling arrangement for a compressor.

A gas turbine engine typically includes a compressor section, a combustor section, and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and a fan section or other engine loads. The compressor section may include low and high pressure compressors.

The compressor section, and especially the high pressure compressor, is subject to high temperatures during engine operation. This affects the lifetime of the compressor section. In order to achieve a desired service lifetime, the compressor section temperature, and thus pressure are limited. However, higher operating pressures may improve the efficiency of the compressor section and overall efficiency of the engine. Some compressor sections may thus employ various cooling arrangements to reduce the temperatures of certain components while still operating at relatively high temperatures.

JP H11 125199 A discloses a cooling air compressor disc clearance control device.

EP 2586968 A2 discloses a spacer for a compression of a gas turbine engine as set forth in the preamble of claim 1.

US 2009/226327 A1 discloses a gas turbine engine including a temperature control device and a method using memory metal.

### SUMMARY

From one aspect, the invention provides a spacer for a compressor of a gas turbine engine as recited in claim 1.

In a further non-limiting embodiment of any of the foregoing spacers, the flow is radially inside a core flowpath of the compressor.

In a further non-limiting embodiment of any of the foregoing spacers, the first side portion is parallel to the second side portion.

From yet another aspect, there is provided a compressor for a gas turbine engine as recited in claim 4.

In a further non-limiting embodiment of the foregoing compressor, one of the first and second compressor stages is the aftmost compressor stage of a high pressure compressor.

In a further non-limiting embodiment of the foregoing compressor, the spacer is received between first and second rims of the first and second compressor stages, respectively.

In a further non-limiting embodiment of any of the foregoing compressors, the first side portion is arranged radially outward from the second side portion.

In a further non-limiting embodiment of any of the foregoing compressors, the second side portion and the middle web include first and second orifices, respectively.

In a further non-limiting embodiment of any of the foregoing compressors, the first and second side portions and the middle web include first and second sets of orifices, respectively.

### BRIEF DESCRIPTION OF THE DRAWINGS

Figure 1 schematically illustrates an example gas turbine engine.
Figure 2 illustrates a section and partial schematic view of a portion of a high pressure compressor of the engine of Figure 1.
Figure 3 schematically illustrates a close-up view of a portion of the high pressure compressor of Figure 2.
Figure 4a illustrates a spacer for the high pressure compressor of Figures 2-4.
Figure 4b illustrates a cutaway view of a portion of the spacer of Figure 5a.
Figure 4c illustrates a close-up cutaway view of a portion of the spacer of Figure 5b.
Figure 5 schematically illustrates a close-up view of a portion of the high pressure compressor blades of Figure 3.

### DETAILED DESCRIPTION

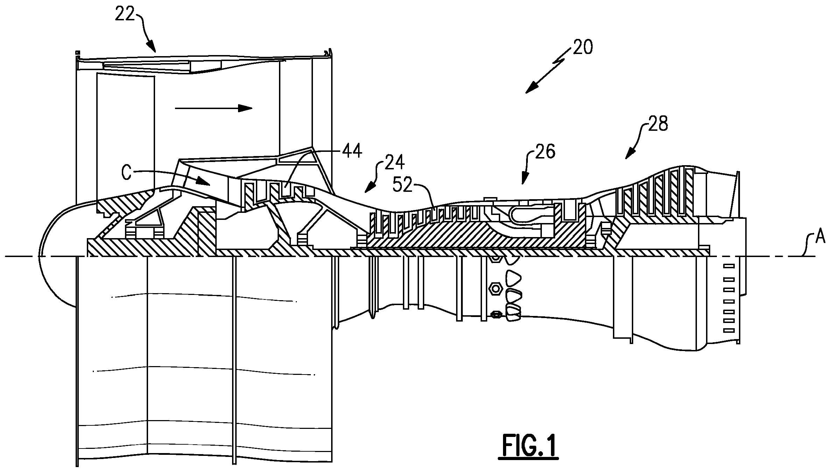

Figure 1 schematically illustrates an example gas turbine engine 20. The example gas turbine engine 20 of Figure 1 is a two-spool turbofan that generally incorporates a fan section 22, a compressor section 24, a combustor section 26, and a turbine section 28. The fan section 22 drives air along a bypass flowpath while the compressor section 24 drives a core airflow C for compression and communication into the combustor section 26 then expansion through the turbine section 28. The compressor section 24 may include a low pressure compressor 44 and a high pressure compressor 52. In this example, the gas turbine engine 20 is a geared gas turbine engine wherein the fan section 22 rotates at a different speed than the turbine section 28. However, the examples in this disclosure are not limited to implementation in the geared gas turbine architecture described, and may be used in other architectures such as a direct drive two-spool gas turbine engine, a three-spool gas turbine engine, or a single spool turbojet.

There are various types of gas turbine engines, and other turbomachines, that can benefit from the examples disclosed herein. Also, although depicted as a turbofan gas turbine engine in the disclosed non-limiting embodiment, it should be understood that the concepts described herein are not limited to use with turbofans as the teachings may be applied to other types of turbine engines.

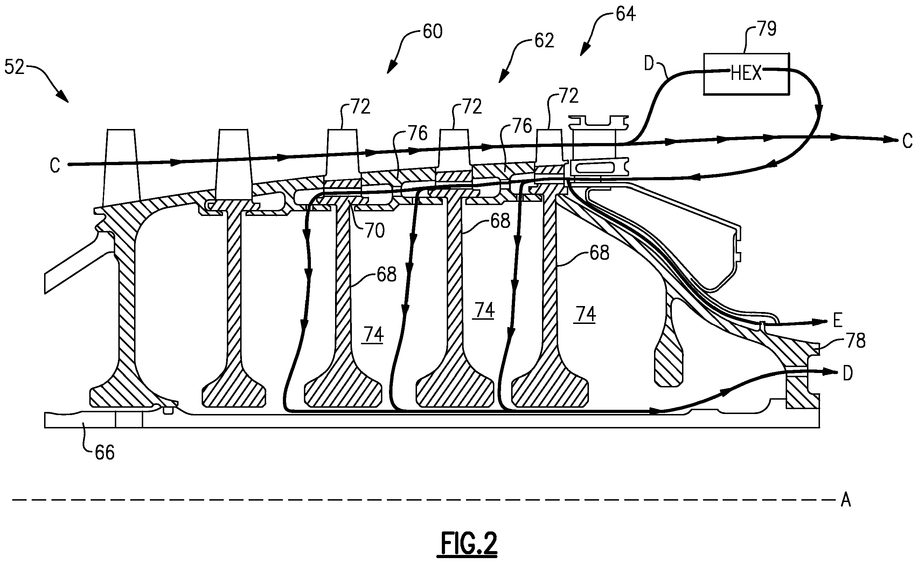

Referring to Figures 2-4c with continuing reference to Figure 1, a high pressure compressor 52 of the compressor section 24 includes several stages 60, 62, 64. In the example shown, stage 64 is the aftmost stage. The stages 60, 62, 64 are connected to one another by way of a tie rod 66 assembly. In another example, the stages 60, 62, 64 may be interconnected by bolted assemblies, welded assemblies, or by other fastening means. While a high pressure compressor 52 is shown, it should be understood that the examples in this disclosure may be used in any other type of compressor, such as the low pressure compressor 44, or an intermediate pressure compressor (for the three-spool gas turbine engine).

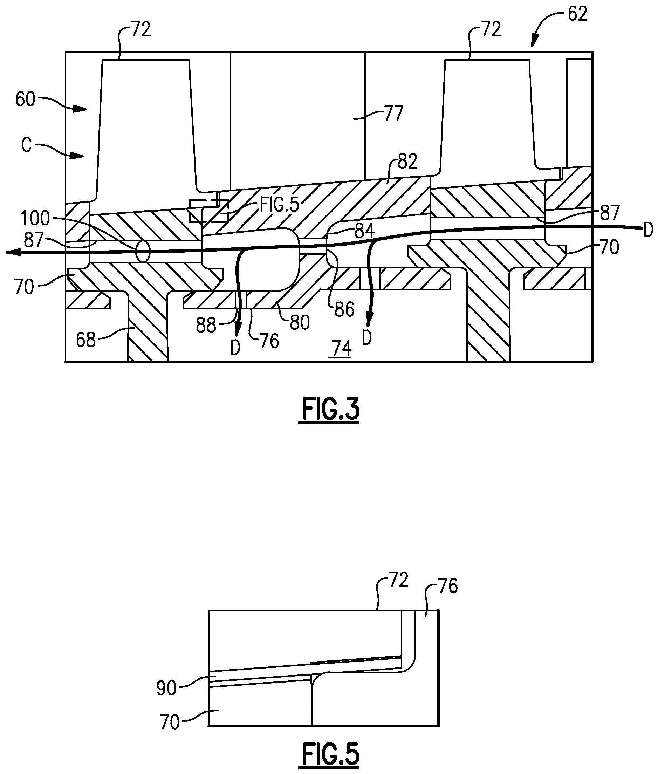

Each of the stages 60, 62, 64 includes a disc 68 with a rim 70 at the disc 68 periphery. A blade 72 is attached to the rim 70. Between each of the discs 68 are air spaces known as bores 74. Between each of the rims 70 are spacers 76. The spacers 76 may support stators 77 (Figure 3). In another example, cantilevered stators interface with the spacers 76.

During operation, the core airflow C flows past the blades 72 and is compressed. Core airflow C exits the compressor 52 from the aftmost stage 64. A portion of the core airflow C may be drawn off into a cooling stream D. As is shown in Figure 2, in one example, the cooling stream D is drawn from the midpoint of the core airflow C flow path. This allows that the highest pressure and lowest temperature air from the core airflow C is provided to the cooling stream D. Cooling stream D may also be drawn from any radial point of the core airflow C flow path (i.e. any point other than the midpoint). In another example, cooling stream D may be drawn off from an upstream (i.e. axially forward) compressor stage 60, 62. The cooling stream D may be less than 3% of the mass flow of the core airflow C exiting the compressor 52.

The cooling stream D may be used to provide initial cooling to the aftmost stage 64 of the compressor 52. However, as the cooling stream D heats up due to heat exchange from the hot compressor 52, additional cooling air may be routed from bores 74 radially outward to supplement the cooling stream D. In one example, additional cooling air may be radially provided from the bores 74 to each stage 60, 62, 64. This additional cooling air serves to make up any losses due to leakage within the compressor 52 as well as provide the coolest air to the forward-most stages of the compressor 52.

In the example shown in Figure 2, the cooling stream D passes through a heat exchanger (HEX) 79 to remove thermal energy from the cooling stream D. The heat exchanger 79 may be any type of heat exchanger, for example, an air-air cooler, an oil-air cooler, etc. The amount of thermal energy removed from the cooling stream D by the heat exchanger 79 may be selectively variable, allowing for optimal conditioning of the cooling stream D. For example, in some engine 20 operating modes, the heat exchanger 79 may be turned off so effectively no thermal energy is removed from the cooling stream D. In other modes, the heat exchanger 79 may provide substantial cooling of the cooling stream D by removing a substantial amount of thermal energy. Once cooled, cooling stream D is used to reduce temperature gradients through components of the compressor 52 to improve component lifetimes.

Conditioned cooling stream D is supplied to the rim 70 of the compressor stage 64. The conditioned cooling stream D may pass through the spacers 76 and rims 70 and down into the bores 74 between stages 60, 62, 64. The conditioned cooling stream D flows progressively in a direction opposite the direction of the core airflow C through the spacers 76 and rims 70 to provide cooling to the rims 70 and to the bores 74. That is, core airflow C defines a downstream flow direction, while cooling stream D flows in an opposite upstream direction.

A portion E of the cooling stream D may be diverted to flow down a compressor hub 78, arranged aft of the last compressor stage 64. After flowing through the rims 70 and bores 74 or along the hub 78, the cooling air D and E may be expelled from the compressor 52 and used to cool another part of the engine 20, such as the turbine section 28.

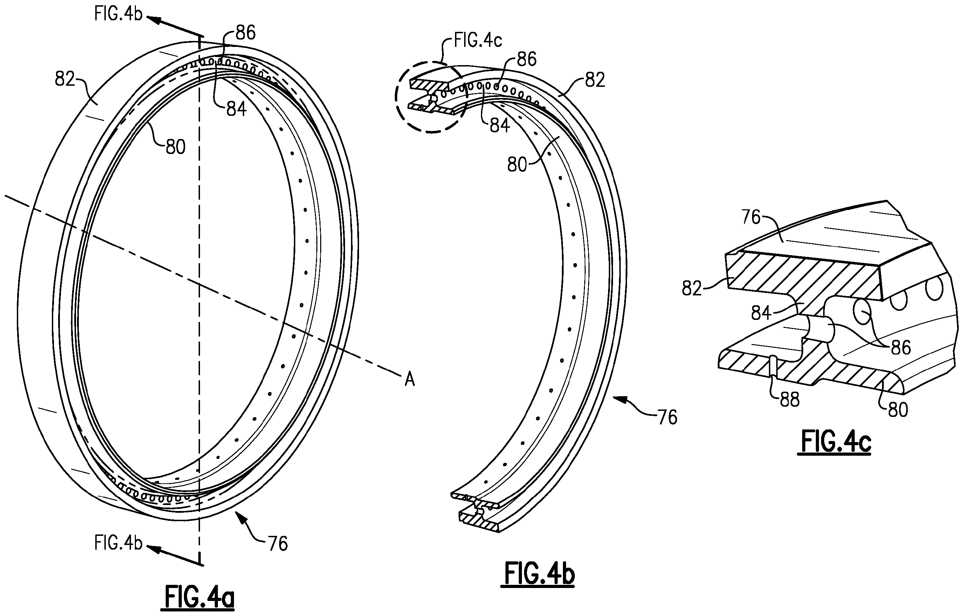

Figure 3 shows a close up view of a portion of the compressor 52, and Figures 4a-c show the spacer 76. The spacer 76 is a ring with an "H"-shaped cross section. That is, the spacer 76 includes first and second sections 80, 82 with a middle web 84 arranged between the first and second sections 80, 82. In the example of Figure 3, the first and second sections 80, 82 are generally parallel to one another, and the web 84 is generally perpendicular to the first and second section 80, 82. However, in another example, the first and second sections 80, 82 may not be parallel to one another. In the example shown, the first section 80 is arranged radially inward from the second section 82.

The spacer 76 includes axial flow orifices 86 in the middle web 84, which allows the cooling stream D to flow axially through the compressor 52 to the next of the stages 60, 62, 64. The rims 70 include axial orifices 87 as well. The spacer also includes radial flow orifices 88, which allows the cooling stream D to flow radially through the compressor 52 and down into the bores 74. In the example shown, the radially inner second parallel section 82 of the spacer 76 includes the radial orifice 88. The orifices 86, 87, 88 allow air to pass through the spacer 76 while the air is rotating at or near the speed of the disc 68 rotation. As is shown in Figures 4a-c, there may be more than one orifice 86, 88 in the spacer 76 at each compressor stage 60, 62, 64.

The orifices 86, 87, 88 include a variable inertia-activated valve 100 (Figure 3) in order to provide optimal cooling to the compressor 52. For example, during certain engine 20 modes, the rims 70 may become particularly hot and all of the cooling stream D may diverted through the axial orifices 86, 87 by closing the radial orifices 88. In turn, the orifices 86, 87, 88 may be regulated open at idle engine 20 conditions when the compressor 52 cooling is turned off to achieve a more uniform temperature distribution from the blade rims 70 to the bores 74.

Figure 5 shows a close-up view of a portion of the blade 72. The blade 72 may extend over the spacer 76. A seal 90 may be arranged on a radially inward side of the blade 72, between the blade 72 and the rim 70 and the spacer 76. The seal 90 prevents the cooling stream D from mixing with the core airflow C to maintain efficiency of the compressor 52.

While Figures 2-3 and 5 depict axially-installed compressor blades 72, it should be understood that the present disclosure can be applied to other types of compressor discs 68, such as integrally bladed rotors (IBRs). In the case of IBRs, the discs 68 may include holes or slots under the blades 72 to allow the cooling stream D to pass through. Although an embodiment of this invention has been disclosed, a worker of ordinary skill in this art would recognize that certain modifications would come within the scope of this invention. For that reason, the following claims should be studied to determine the true scope and content of this invention.

## Claims

1. A spacer (76) for a compressor (52) of a gas turbine engine (20), comprising:
a first side portion (82);
a second side portion (80) spaced apart from the first side portion (82); and
a middle web (84) arranged between the first and second side portions (82, 80), wherein the middle web (84) includes at least one web orifice (86) to communicate flow in a direction that is opposite from a core flowpath flow direction (C), **characterised in that**:
one of the first and second side portions (82, 80) includes at least one side portion orifice (88) in a direction that is perpendicular to the core flowpath direction, wherein the at least one web orifice (86) or the at least one side portion orifice (88) includes an inertia-activated valve (100), the inertia-activated valve configured to vary a flowrate of the flow through the at least one web or side portion orifice (86, 88).

2. The spacer (76) of claim 1, wherein the flow is radially inside a core flowpath (C) of the compressor (52).

3. The spacer (76) of claim 1 or 2, wherein the first side portion (82) is parallel to the second side portion (80).

4. A compressor (52) for a gas turbine engine (20), comprising:
a first compressor stage (60; 62; 64);
a second compressor stage (62; 64; 60); and
the spacer (76) of any preceding claims, arranged between the first and second compressor stages.

5. The compressor (52) of claim 4, wherein one of the first and second compressor stages (60, 62, 64) is the aftmost compressor stage (64) of a high pressure compressor (52).

6. The compressor (52) of claim 4 or 5, wherein the spacer (76) is received between first and second rims (70) of the first and second compressor stages (60, 62, 64), respectively.

7. The compressor (52) of any of claims 4 to 6, wherein the first side portion (82) is arranged radially outward from the second side portion (80).

8. The compressor (52) of claim 7, wherein the second side portion (80) and the middle web (84) include first and second orifices (88, 86), respectively.

9. The compressor of claim 7, wherein the first and second side portions (82, 80) and the middle web (84) include first and second sets of orifices (88, 86), respectively.

## Patentansprüche

1. Abstandshalter (76) für einen Verdichter (52) eines Gasturbinentriebwerks (20), der Folgendes umfasst:
einen ersten Seitenabschnitt (82);
einen zweiten Seitenabschnitt (80), der von dem ersten Seitenabschnitt (82) beabstandet ist; und
einen Mittelsteg (84), der zwischen dem ersten und zweiten Seitenabschnitt (82, 80) angeordnet ist, wobei der Mittelsteg (84) mindestens eine Stegöffnung (86) beinhaltet, um eine Strömung in eine Richtung zu übertragen, die entgegengesetzt zu einer Strömungsrichtung (C) des Kernströmungswegs ist,
**dadurch gekennzeichnet, dass**:
einer des ersten und zweiten Seitenabschnitts (82, 80) mindestens eine Seitenabschnittsöffnung (88) in einer Richtung, die senkrecht zur Richtung des Kernströmungswegs ist, beinhaltet, wobei die mindestens eine Stegöffnung (86) oder die mindestens eine Seitenabschnittsöffnung (88) ein trägheitsaktiviertes Ventil (100) beinhaltet, wobei das trägheitsaktivierte Ventil dazu konfiguriert ist, eine Strömungsrate der Strömung durch die mindestens eine Steg- oder Seitenabschnittsöffnung (86, 88) zu variieren.

2. Abstandshalter (76) nach Anspruch 1, wobei die Strömung radial innerhalb eines Kernströmungswegs (C) des Verdichters (52) verläuft.

3. Abstandshalter (76) nach Anspruch 1 oder 2, wobei der erste Seitenabschnitt (82) parallel zu dem zweiten Seitenabschnitt (80) verläuft.

4. Verdichter (52) für ein Gasturbinentriebwerk (20), der Folgendes umfassend:
eine erste Verdichterstufe (60; 62; 64);
eine zweite Verdichterstufe (62; 64; 60); und
den Abstandshalter (76) nach einem der vorhergehenden Ansprüche, der zwischen der ersten und der zweiten Verdichterstufe angeordnet ist.

5. Verdichter (52) nach Anspruch 4, wobei eine der ersten und zweiten Verdichterstufe (60, 62, 64) die letzte Verdichterstufe (64) eines Hochdruckverdichters (52) ist.

6. Verdichter (52) nach Anspruch 4 oder 5, wobei der Abstandshalter (76) jeweils zwischen ersten und zweiten Rändern (70) der ersten und zweiten Verdichterstufe (60, 62, 64) aufgenommen ist.

7. Verdichter (52) nach einem der Ansprüche 4 bis 6, wobei der erste Seitenabschnitt (82) radial nach außen von dem zweiten Seitenabschnitt (80) angeordnet ist.

8. Verdichter (52) nach Anspruch 7, wobei der zweite Seitenabschnitt (80) und der Mittelsteg (84) jeweils erste und zweite Öffnungen (88, 86) beinhalten.

9. Verdichter nach Anspruch 7, wobei der erste und zweite Seitenabschnitt (82, 80) und der Mittelsteg (84) jeweils erste und zweite Sätze Öffnungen (88, 86) beinhalten.

## Revendications

1. Entretoise (76) pour compresseur (52) de moteur à turbine à gaz (20), comprenant :
une première partie latérale (82) ;
une seconde partie latérale (80) espacée de la première partie latérale (82) ; et
une bande médiane (84) agencée entre les première et seconde parties latérales (82, 80), dans laquelle la bande médiane (84) comprend au moins un orifice de bande (86) pour communiquer l'écoulement dans une direction qui est opposée à une direction d'écoulement de chemin d'écoulement central (C),
**caractérisée en ce que** :
l'une des première et seconde parties latérales (82, 80) comprend au moins un orifice de partie latérale (88) dans une direction qui est perpendiculaire à la direction du chemin d'écoulement central, dans laquelle l'au moins un orifice de bande (86) ou l'au moins un orifice de partie latérale (88) comprend une vanne activée par inertie (100), la vanne activée par inertie étant configurée pour faire varier le débit de l'écoulement à travers au moins un orifice de bande ou de partie latérale (86, 88).

2. Entretoise (76) selon la revendication 1, dans laquelle l'écoulement est radialement à l'intérieur d'un chemin d'écoulement central (C) du compresseur (52).

3. Entretoise (76) selon la revendication 1 ou 2, dans laquelle la première partie latérale (82) est parallèle à la seconde partie latérale (80).

4. Compresseur (52) de moteur à turbine à gaz (20), comprenant :
un premier étage de compresseur (60 ; 62 ; 64) ;
un second étage de compresseur (62 ; 64 ; 60) ; et
l'entretoise (76) selon une quelconque revendication précédente, agencée entre les premier et second étages de compresseur.

5. Compresseur (52) selon la revendication 4, dans lequel l'un des premier et second étages de compresseur (60, 62, 64) est l'étage de compresseur le plus à l'arrière (64) d'un compresseur haute pression (52).

6. Compresseur (52) selon la revendication 4 ou 5, dans lequel l'entretoise (76) est reçue entre les premier et second rebords (70) des premier et second étages de compresseur (60, 62, 64), respectivement.

7. Compresseur (52) selon l'une quelconque des revendications 4 à 6, dans lequel la première partie latérale (82) est agencée radialement vers l'extérieur par rapport à la seconde partie latérale (80).

8. Compresseur (52) selon la revendication 7, dans lequel la seconde partie latérale (80) et la bande médiane (84) comprennent respectivement des premier et second orifices (88, 86) .

9. Compresseur selon la revendication 7, dans lequel les première et seconde parties latérales (82, 80) et la bande médiane (84) comprennent respectivement des premier et second ensembles d'orifices (88, 86).
